# EUROPÄISCHE PATENTANMELDUNG

(11) **EP 3 552 692 A1**
(43) Veröffentlichungstag der Anmeldung: **16.10.2019**
(21) Anmeldenummer: 18020388.7
(22) Anmeldetag: 14.08.2018
(51) Int. Cl.: B01D 67/00, B33Y 80/00, B29C 64/00

(54) **VERFAHREN ZUM GENERATIVEN FERTIGEN EINES DREIDIMENSIONALEN MEMBRANARTIGEN BAUTEILS, SOWIE EIN SOLCHES DREIDIMENSIONALES MEMBRANES BAUTEIL**

(30) Priorität: 14.04.2018 DE 102018003063
(71) Anmelder: Linde Aktiengesellschaft, 80331 München (DE)
(72) Erfinder: Scholz, Jürgen, 81379 München (DE)

(57) **Zusammenfassung**

Erfindungsgemäß ist ein Verfahren zum generativen Fertigen eines dreidimensionalen membranartigen Bauteils vorgesehen. Dieses Verfahren umfasst die folgenden Schritte:
- Bereitstellen eines metallischen Ausgangsmaterials,
- Schmelzen des Ausgangsmaterials mit einer Wärmequelle zum Ausbilden einer Bauteilschicht,
- Wiederholen der vorstehenden Schritte.

Das erfindungsgemäße Verfahren zeichnet sich dadurch aus, dass zumindest ein Schritt vorgesehen ist, bei dem Poren in zumindest einer Bauteilschicht ausgebildet werden, so dass zumindest ein Bereich des Bauteils membranartige Eigenschaften aufweist.

## Beschreibung

Die vorliegende Erfindung betrifft ein Verfahren zum generativen Fertigen eines dreidimensionalen membranartigen Bauteils, sowie ein solches dreidimensionales membranartiges Bauteil.

Eine Membran oder Membrane ist eine dünne Schicht eines Materials, welche den Stofftransport durch diese Schicht beeinflusst bzw. steuert. Membranen treten in vielfältigen Anwendungen und Funktionen auf. In der Technik verwendet man Membranen als Trennschicht in der Membrantechnik.

Hinsichtlich Ihrer Durchlässigkeit werden Membranen nach selektiv permeabel, unidirektional permeabel und omnipermeabel unterschieden.

Zum Trennen von Stoffen sind weiterhin Abscheideeinrichtungen oder auch Abscheider bekannt. Die Abscheidung als mechanisches Trennverfahren dient zum Trennen von Stoffgemischen (z. B. Emulsionen, Suspensionen oder Aerosole). Das hierbei angestrebte Ziel ist die vollständige Entfernung eines oder mehrerer Bestandteile des Stoffgemisches.

Beispiele für Abscheider sind Fettabscheider für Gaststätten und andere lebensmittelverarbeitende Betriebe, Ölabscheider bei der Entwässerung von Tankstellen, Wasserabscheider für Nebel in der Klimatechnik, Ölabscheider bei der Druckluftversorgung, Filter zur Entstaubung, Nassabscheider, Ölnebelabscheider, Schlauchfilter sowie Luftabscheider.

Ein Sieb ist eine Vorrichtung zum Trennen fester Stoffe zumeist nach dem Kriterium Korngröße. Nach einer solchen Trennung erhält man mindestens zwei Fraktionen, die sich in ihrer minimalen respektive maximalen Korngröße signifikant voneinander unterscheiden. In der mechanischen Verfahrenstechnik zählt das Sieben zu den Klassierverfahren.

Ein Aufgabegut ist meist ein Feststoffgemisch mit unterschiedlichen Korngrößen (z. B. Schüttgut, Haufwerk), es kann aber auch ein Feststoffgemisch zusammen mit Flüssigkeit sein. Die Trennung erfolgt durch einen Siebboden oder einen Siebbelag, ein je nach Bedarf feineres oder gröberes Geflecht, Drahtgitter, Lochblech oder ähnliches.

Molekularsieb (oder auch kurz Molsieb) ist die funktionelle Bezeichnung für natürliche und synthetische Zeolithe oder andere Stoffe, die eine hohe Adsorptionskapazität für Gase, Dämpfe und gelöste Stoffe mit bestimmten Molekülgrößen haben. Durch eine geeignete Wahl des Molekularsiebes ist es möglich, Moleküle verschiedener Größen zu trennen. Neben Zeolithen gibt es auch Kohlenstoffmolekularsiebe. Einerseits sind diese prozessbedingt noch etwas teurer, andererseits können diese während der Pyrolyse für eine bestimmte Trennung spezialisiert werden.

Die Molekularsiebe weisen eine große innere Oberfläche (600-700 m²/g) auf und haben einheitliche Porendurchmesser, die in der Größenordnung der Durchmesser von Molekülen liegen.

In der Technik werden die Porendurchmesser oft noch in Angström angegeben. Das Molekularsieb Zeolith A hat eine Porenweite von 3 Å (= 0,3 nm). In die Poren können somit nur Moleküle hineingelangen, die einen kleineren (wirksamen) Durchmesser als 0,3 nm haben. Mit Molekularsieben können Gase und Lösungsmittel dynamisch getrocknet, Gemische von geradkettigen und verzweigten Alkanen getrennt oder Wasser enthärtet werden.

Handelsüblich sind Molekularsiebe in gepulverter, Stäbchen- oder Perlform. Die gängigsten Porenweiten sind 3 Å, 4 Å, 5 Å und 10 Å. Stäbchen- und perlförmige Molekularsiebe sind auch mit Feuchtigkeitsindikator zur Anzeige des Erreichens der Kapazitätsgrenze erhältlich.

Ein Filter hält, wie ein Sieb, Feststoffe aus einem Gas- oder Flüssigkeitsstrom zurück. Die feststofffreie Phase wird bei der Filtration von Flüssigkeiten mit Filtrat und in der Gasfiltration meist mit Reingas bezeichnet. An der Oberfläche des Filters zurückbleibender Feststoff heißt Filterkuchen, die Filtration findet jedoch insbesondere in der Gasphase je nach Aufbau des Filters auch oder ausschließlich in dessen Innerem statt, so dass nicht in jedem Fall ein Filterkuchen entsteht. Die treibende Kraft einer Filtration ist eine Druckdifferenz des Transportmediums vor und nach dem Filter. Das Medium wird entweder durch den Filter gesaugt oder durch Überdruck durch den Filter gepresst.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren. Hierbei wird das Werkstück Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen, und erstarrt anschließend in der gewünschten Kontur. Die dafür erforderliche Energie wird durch einen Elektronenstrahl eingebracht. Das Verfahren erfolgt meistens in einer Inertgas gefluteten UnterdruckKammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Ein Ziel bei den vorstehend genannten generativen Fertigungsverfahren ist es, eine möglichst effiziente Energieeinbringung zu gewährleisten, so dass ein sicherer Herstellungsprozess und eine hohe Güte des Bauteiles erzielt werden.

In den letzten Jahren wurden Verfahren entwickelt, um die Verarbeitung einkomponentiger Metallwerkstoffe zu verbessern. Entsprechende Verfahren werden beispielsweise unter der Bezeichnung Selective Laser Melting (SLM) kommerziell vertrieben.

Bei diesen Verfahren wird versucht, kritische Einflüsse und Vorgänge bei der Energieeinbringung durch geeignete Maßnahmen zu mindern. In diesem Zusammenhang ist die Verwendung einer Substratplatte, auf der das Bauteil fixiert wird, die Prozessführung unter Schutzgasatmosphäre oder die Anwendung neuer Scan-Strategien zur Belichtung des Pulvers mittels Laserenergie bekannt.

Aufgabe der vorliegenden Erfindung ist es ein Verfahren zum generativen Fertigen bereitzustellen, mittels dem ein dreidimensionales membranartiges Bauteil mit nahezu beliebiger dreidimensionaler Geometrie auf einfache Weise herstellbar ist.

Eine weitere Aufgabe der vorliegenden Erfindung ist es ein membranartiges Bauteil mit vorbestimmten Eigenschaften und beliebiger Geometrie effizient herzustellen.

Diese Aufgaben werden durch die unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen membranartigen Bauteils vorgesehen. Dieses Verfahren umfasst die folgenden Schritte:
- Bereitstellen eines Ausgangsmaterials,
- Schmelzen des Ausgangsmaterials mit einer Wärmequelle zum Ausbilden einer Bauteilschicht,
- Wiederholen der vorstehenden Schritte.

Das erfindungsgemäße Verfahren zeichnet sich dadurch aus, dass zumindest ein Schritt vorgesehen ist, bei dem Poren in zumindest einer Bauteilschicht ausgebildet werden, so dass zumindest ein Bereich des Bauteils membranartige Eigenschaften aufweist.

Das Ausgangsmaterial kann vorzugsweise aus einem oder mehreren Metallen bzw. Metallpulvern oder auch aus Kunststoff bzw. Kunststoffpulver ausgebildet sein.

Unter membranartigen Eigenschaften können im Rahmen der vorliegenden Erfindung Eigenschaften verstanden werden, die einen Stofftransport durch diesen Bereich des membranartigen Bauteils ermöglichen und beeinflussen, das bedeutet, zumindest ein Bereich des membranartigen Bauteils kann selektiv permeabel, unidirektional permeabel oder omnipermeabel ausgebildet sein. Auch eine Abscheidung im Sinne eines mechanischen Trennverfahrens zum Trennen von Stoffgemischen kann im Rahmen der vorliegenden Erfindung unter membranartigen Eigenschaften verstanden werden. Die membranartigen Eigenschaften können auch eine Trennung von Feststoffen hinsichtlich ihrer Korngröße umfassen. Weiterhin können die membranartigen Eigenschaften das Trennen von Molekülen verschiedener Größen beinhalten. Die membranartigen Eigenschaften können auch als Filtereigenschaften angesehen werden, bei denen Feststoffe aus einem Gas oder einem Flüssigkeitsstrom zurückgehalten werden.

Demgemäß kann ein dreidimensionales membranartiges Bauteil im Rahmen der vorliegenden Erfindung eine Membran, eine Abscheideeinrichtung, ein Sieb, ein Molekularsieb, ein Filter oder ein Bauteil mit ähnlichen Eigenschaften sein.

Dadurch, dass erfindungsgemäß vorgesehen ist, das membranartige Bauteil mittels eines generativen Fertigungsverfahrens herzustellen, ist es möglich, beliebig komplexe Membrangeometrien vorzusehen.

Weiterhin ist es möglich, Membranen bzw. membranartige Bauteile aus Werkstoffen auszubilden, die mit bekannten Verfahren nur äußerst kompliziert bzw. gar nicht herstellbar sind. Beispielhaft hierfür sind zum Beispiel Materialien, die schlecht zu schäumen oder zu sintern sind.

Zudem können auch kleinste Membranen mit Poren im Submillimeter-Bereich, wie sie beispielsweise in Molekularsieben vorzufinden sind, in komplexen Geometrien hergestellt werden.

Unter einem generativen Fertigen wird im Rahmen der vorliegenden Erfindung das Lagen bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

Bei generativen Fertigungsverfahren werden zumeist Wärme- oder Energiequellen verwendet, die an einem bestimmten Punkt einer Schicht bzw. Lage eines herzustellenden Bauteils Energie einbringen. Diese während des Herstellungsprozesses eingebrachte Energie verbleibt in dem aufzubauenden Bauteil und erhöht dessen Temperatur. Wie vorstehend erläutert, ist diese überschüssige Wärme im Bauteil zumeist nachteilig und hat negative Einflüsse auf die Materialeigenschaften. Zudem hat die überschüssige Wärme, die nicht aus dem Bauteil abgeführt wird, einen negativen Einfluss auf den Herstellungsprozess selbst. Dies führt zu Prozessinstabilitäten und einer verminderten Reproduzierbarkeit.

Der Schritt, bei dem die Poren in zumindest einer Bauteilschicht ausgebildet werden, kann durch generatives Fertigen derart ausgeführt werden, dass das Ausgangsmaterial nur teilweise vollständig aufgeschmolzen wird und in einem Bereich des nicht vollständig aufgeschmolzenen Ausgangsmaterials die entsprechenden Poren ausgebildet werden.

Zusätzlich und/oder alternativ kann das Ausbilden der Poren beim generativen Fertigen auch derart ausgeführt werden, dass beim generativen Fertigen Fehlstellen im Material vorgesehen werden, um die Poren auszubilden.

Weiterhin können die Poren zusätzlich und/oder alternativ in zumindest einer Bauteilschicht ausgebildet werden, indem eine zusätzliche chemische Behandlung einer Schicht als Zwischenschritt während des Fertigens und/oder nach Abschluss der generativen Fertigungsschritte als Nachbehandlung derart ausgeführt wird, dass das Material aufgelöst und/oder ausgespült wird, um die Poren auszubilden.

Grundsätzlich ist beim generativen Fertigen von Bauteilen aus Metall eine gewisse Porosität inhärent vorhanden, die oftmals als nachteilig empfunden wird. Beim Herstellen von Membranen kann diese Porosität gezielt genutzt und durch die Parameter des Herstellungsprozesses gezielt gesteuert werden, um eine bestimmte Porosität zu erzielen.

Es kann auch vorgesehen sein die Poren im Bauteil als Konstruktionselemente vorzusehen. Das bedeutet die Poren werden im CAD-Modell erstellt und dann beim generativen Fertigen entsprechend ausgebildet. Die Größe der Poren ist dann nahezu beliebig einstellbar, wobei lediglich die minimale Schichtdicke, welche durch das generative Fertigungsverfahren herstellbar ist, eine Begrenzung darstellt.

Der vorliegenden Erfindung liegt hinsichtlich der chemischen Behandlung und/oder Nachbehandlung, wie z.B. Beizen, die Erkenntnis zugrunde, dass durch die chemische Nachbehandlung ein unterschiedlicher Anteil aufgrund der unterschiedlichen Eigenschaften des verwendeten Metallpulvers aus einer Bauteilschicht herauslösbar ist.

Durch eine solche chemische Behandlung, wie zum Beispiel durch Beizen oder Ätzen, können die Membraneigenschaften im Bauteil ausgebildet werden. Die Poren können demgemäß im Bauteil mittels eines chemischen Behandlungsmittels ausbildbar sein.

Eine solche chemische Behandlung bzw. Nachbehandlung spezifisch auf den oder die verwendeten Ausgangsmaterialien bzw. Werkstoffe abgestimmt sein muss. Wie vorstehend kurz erläutert, können bei einer chemischen Nachbehandlung die Beschichtungselemente des Ausgangsmaterials bzw. der Materialpartikel ganz oder teilweise aufgelöst und ausgespült werden, so dass zwar noch ein mechanischer Verbund zwischen den einzelnen Partikeln bestehen bleibt, jedoch die gewünschten Membraneigenschaften erzielt werden können.

Die gewünschten Membraneigenschaften betreffen insbesondere die vorstehend genannten Eigenschaften hinsichtlich einer Durchlässigkeit, einer Durchlassrichtung, aber insbesondere hinsichtlich einer Porengröße der in zumindest einer Bauteilschicht ausgebildeten Poren.

Hierbei ist vorgesehen, dass die Poren eine Porosität bzw. einen Durchmesser von in etwa 100 nm bis in etwa 1 mm bzw. 100 nm bis 1 µm (bspw. Schwebstofffilter für Bakterein) bzw. 1 µm bis 10 µm (bspw. Filter für Asbestfasern oder Feinstaub) bzw. 10 µm bis 100 µm (bspw. Filter für Tonerpartikel) bzw. 100 µm bis 1 mm bzw. 3 Å bzw. 4 Å und/oder 5 Å und/oder 10 Å (bspw. Molekularsiebe) aufweisen können.

Die Entstehung der Poren kann durch die Einstellung der Prozessparameter, wie z.B. die Wahl des bzw. der Ausgangsmaterialien und/oder der Temperatur in einer Prozesskammer und/oder der Temperatur der Wärmequelle zum Aufschmelzen des Ausgangsmaterial und/oder die Wahl eines entsprechenden Prozessgases beeinflussbar sein.

Die membranartigen Eigenschaften können entweder in vorbestimmten bzw. vordefinierten Schichten und/oder Bereichen des Bauteils ausgebildet werden.

Weiterhin kann vorgesehen sein, dass in einem und/oder in mehreren Schritten unterschiedliche Ausgangsmaterialien zum Erzeugen der entsprechenden Bauteilschichten verwendet werden und/oder in verschiedenen Bereichen des Bauteils unterschiedliche Ausgangsmaterialien verwendet werden.

Das bedeutet, dass beispielsweise zu Beginn des generativen Fertigens ein Metallpulver mit geringer Oxidation verwendet werden kann, wohingegen gegen Ende des generativen Fertigens ein sehr stark oxidiertes Metallpulver verwendet werden kann. Auf diese Weise kann während des Aufbaus einer Bauteilschicht die Dicke oder die Eigenschaft der Beschichtung des Metallpulvers geändert und somit die membranartigen Eigenschaften beeinflusst werden.

Bei der Verwendung eines Gemisches aus verschiedenen Metallpulvern können die Schmelzpunkte der Einzelkomponenten in einem ähnlichen Bereich liegen. Ansonsten besteht die Gefahr, dass eine Komponente entweder verdampft oder nicht aufschmilzt.

Das Verdampfen einer Einzelkomponente kann erfindungsgemäß vorgesehen sein , um mittels des entweichenden Dampfes eine schaumartige Struktur im Bauteil auszubilden. Die verdampfende Komponente muss jedoch hinsichtlich ihrer Masse und/oder hinsichtlich Ihres Volumens den geringeren Anteil des Pulvergemisches bilden.

Weiterhin kann vorgesehen sein, die zu verdampfende Komponente als Beschichtung auf dem Ausgangsmaterial, z.B. dem Pulver, vorzusehen.

Ein weiterer Vorteil des generativen Fertigens einer Membran liegt darin, dass die Membran mit Bereichen unterschiedlicher Porosität ausgebildet sein kann. Die Membran kann somit nur lokal porös und damit für bestimmte Stoffe durchlässig sein.

Wenn das membranartige Bauteil aus Metall ausgebildet ist, kann zum generativen Fertigen vorzugsweise das additive Pulverbettverfahren oder das Pulverauftragsschweißen (Laser oder GMA) verwendet werden.

Im Falle von membranartigen Bauteilen, die aus Kunststoff ausgebildet werden sollen, ist vorzugsweise das additive Pulverbettverfahren oder auch das Filament-basiertes Verfahren vorgesehen.

Grundsätzlich ist erfindungsgemäß vorgesehen, dass mittels der vorstehend genannten und in der Beschreibungseinleitung der vorliegenden Patentanmeldung kurz beschriebenen generativen Fertigungsverfahren ein membranartiges Bauteil ausgebildet werden kann.

Allen diesen Verfahrensvarianten ist gemeinsam, dass ein Ausgangsmaterial, wie z.B. ein Pulver, ein Draht oder ein Filament, an seiner Oberfläche eine andere Materialzusammensetzung aufweisen kann, als im Inneren des Ausgangsmaterials. Dies kann beispielsweise eine beliebige Beschichtung oder eine relativ einfache Modifikation, wie eine Oxidschicht oder eine Nitridschicht sein.

Der Aufbau der gewünschten Bauteilgeometrie soll anhand der für die einzelnen generativen Fertigungsverfahren verfahrenstypischen Parameter erfolgen. Im besten Fall werden diese so gewählt, dass die Bauteile nicht vollständig kompakt ausgebildet sind, sondern unmittelbar nach Abschluss des generativen Fertigungsverfahrens ihre membranartigen Eigenschaften aufweisen.

Weiterhin kann vorgesehen sein, während des generativen Fertigens ein Prozessgas zuzuführen. Je nach Wahl des Ausgangsmaterials bzw. des generativen Fertigungsverfahrens ist es möglich, dass das Prozessgas Einfluss auf die Ausbildung und/oder die Größe der Poren hat.

Das Prozessgas kann ein inertes Gas, wie z.B. Argon, Helium, Neon, Krypton, Xe-non oder Radon oder ein Aktivgas wie Wasserstoff (H2), Kohlenmonoxid (CO), Silan, Sauerstoff (O2), Kohlendioxid (CO2), Stickstoff (N2) oder auch Mischungen daraus mit oder ohne reduzierende oder oxidierende Komponenten, umfassen. Demgemäß wird auch ein Schutzgas, wie z.B. ein bei einem Laser- oder Lichtbogen-Verfahren im Bereich der Düse zugeführtes Schutzgas als Prozessgas im Sinne der vorliegenden Erfindung verstanden.

Hierfür können insbesondere die vorstehend aufgeführten aktiven Gase vorgesehen sein, die die Eigenschaften der Schmelze, wie z.B. Viskosität, beeinflussen können. Aber auch inerte Gase können vorgesehen sein, die die physikalische Eigenschaften wie Dichte, Wärmeleitfähigkeit das Verhalten der Schmelze bzw. der Erstarrung und somit die Porenbildung beeinflussen.

Zudem kann während des generativen Fertigens ein Temperieren des Materials und/oder des Prozessgases erfolgen. Unter einem Temperieren kann ein Kühlen und/oder ein Erwärmen des Ausgangsmaterials, einer Prozessgasatmosphäre, verstanden werden.

Weiterhin kann ein Stabilisierungsschritt vorgesehen sein, indem eine Bauteilschicht gekühlt und verfestigt wird.

Weiterhin ist erfindungsgemäß ein generativ gefertigtes dreidimensionales membranartiges Bauteil vorgesehen, wobei das Bauteil gemäß dem vorstehend kurz erläuterten Verfahren hergestellt ist. Ein solches Bauteil zeichnet sich dadurch aus, dass in zumindest einem Bereich des Bauteils Poren ausgebildet sind, so dass das Bauteil membranartige Eigenschaften aufweist.

Was im Rahmen der vorliegenden Erfindung unter membranartigen Eigenschaften zu verstehen ist, wurde vorstehend bereits erläutert.

Ein solches Bauteil kann eine homogene oder eine inhomogene Geometrie in einer Durchflussrichtung besitzen. Insbesondere kann vorgesehen sein, dass das Bauteil nahezu jede beliebige Geometrie aufweist. Wie oben bereits erläutert kann auch die Porosität des Bauteils variieren. So können Bereiche vorgesehen sein, die grundsätzlich nicht porös sind und Bereiche, die porös sind. Die Porosität kann sich auch allmählich in eine Richtung verändern. Diese Richtung, entlang der sich die Porosität verändert kann, parallel zur Durchflussrichtung oder quer zur Durchflussrichtung des zu trennenden Stoffgemisches verlaufen.

Das Bauteil kann beispielsweise sieb-, trichter-, rohr-, igel-, stäbchen- und perlförmig, beliebig gewinkelt, verzweigt oder gebogen ausgebildet sein.

Das bedeutet, das s das Bauteil als eine Membran, die einen Stofftransport in einer Durchflussrichtung beeinflusst, als ein Abscheider als mechanische Trenneinrichtung zum Trennen von Stoffgemischen, zum Beispiel Emulsionen, Suspensionen oder Aerosole, vorgesehen sein kann. Es ist aber auch möglich, dass das membranartige Bauteil als Sieb zum Trennen fester Stoffe hinsichtlich ihrer Korngröße ausgebildet ist. Ein spezieller Anwendungsfall oder ein spezielles Ausführungsbeispiel eines Siebes ist beispielsweise ein Molekularsieb, mit dem es möglich ist, Moleküle verschiedener Größen mechanisch voneinander zu trennen. Zudem kann das generativ gefertigte membranartige Bauteil ganz allgemein einen Filter ausbilden, der Feststoff aus einem Gas und/oder aus einem Flüssigkeitsstrom zurückhält.

Im Folgenden wird das erfindungsgemäße Verfahren zum generativen Fertigen eines dreidimensionalen membranartigen Bauteils beispielhaft beschrieben. Grundsätzlich ist, wie bereits vorstehend erläutert, nahezu jedes generative Fertigungsverfahren zum Ausbilden des dreidimensionalen membranartigen Bauteils geeignet.

Das Verfahren wird im Folgenden jedoch beispielhaft anhand des Laser-Schmelzverfahrens mit Pulverbett erläutert.

In einem ersten Schritt wird ein metallisches Ausgangsmaterial auf einer Bauplattform in Form eines Pulverbettes mittels einer Beschichtungseinrichtung aufgebracht.

Wie vorstehend erläutert, kann anstelle eines metallischen Ausgangsmaterials auch ein Ausgangsmaterial aus Kunststoff vorgesehen sein. Im Falle eines metallischen Ausgangsmaterials kann dieses auch mittels einer Pulverzuführung oder einer Drahtzuführung oder in Form von Filamenten bereitgestellt werden.

In einem nächsten Schritt wird der Prozesskammer ein Prozessgas zugeführt. Im vorliegenden Fall ist beispielsweise ein inertes Schutzgas, wie zum Beispiel Stickstoff, vorgesehen.

Im darauffolgenden Schritt wird das Ausgangsmaterial mittels einer Wärmequelle, wie zum Beispiel einem Laser, aufgeschmolzen.

Um nun einen Bereich mit membranartigen Eigenschaften bzw. einen Trennschichtbereich bzw. einen Membranbereich im Bauteil auszubilden, ist nun vorgesehen, das Material in diesem Bereich nicht vollständig aufzuschmelzen. Auf diese Weise verschmelzen die Partikel nur in einem Randbereich miteinander, wodurch zwischen den einzelnen Partikeln des Ausgangsmaterials Poren ausgebildet werden. Beispielsweise kann vorgesehen sein eine Laserleistung während der Belichtung einer einzelnen oder mehrerer Schichten in ausgewählten Bereichen zu reduzieren oder eine zeitweise Erhöhung der Scangeschwindigkeit vorzusehen, was zu einer geringeren Aufschmelzung führt.

Zusätzlich und/oder alternativ kann vorgesehen sein, in bestimmten Bereichen das Material überhaupt nicht aufzuschmelzen, so dass dort ebenfalls Poren im Bauteil ausgebildet werden.

In der Regel erfolgt die Abkühlung einer Schicht während der Laser Material an anderer Stelle aufschmilzt oder auch wenn eine neue Pulverschicht aufgetragen wird. Da das aufgeschmolzene Volumen jedoch relativ klein ist, wie bei fast allen generativen Fertigungsverfahren, kann zum Ausbilden der Poren während des generativen Fertigens vorgesehen sein, die Schicht bzw. die Partikel bereichsweise abzukühlen, so dass diese nicht vollständig aufgeschmolzen werden.

Zusätzlich und/oder alternativ kann gemäß dem vorstehend beschriebenen Verfahren auch vorgesehen sein, dass eine Schicht aus Metallpartikeln unterschiedlicher Eigenschaften bereitgestellt wird. Das bedeutet, dass im vorliegenden Fall das Metallpulver, gleiches gilt aber auch für einen Draht oder für Filamente, bzw. dessen Partikel an der Oberfläche eine andere Materialzusammensetzung aufweisen, als im Inneren. Derartige Eigenschaften können beispielsweise mittels einer entsprechenden Beschichtung oder einer relativ einfachen Modifikation, bspw. mittels einer entsprechend auf die Partikel aufgebrachten Oxid- oder Nitridschicht sein.

Zusätzlich und/oder alternativ kann gemäß dem vorstehend beschriebenen Verfahren auch vorgesehen sein, dass ein chemischen Behandlungsschritt einer Schicht entweder als Zwischenschritt oder nach Herstellung des Bauteils als Nachbehandlung derart vorgesehen ist, dass die Beschichtungselemente der Materialpartikel teilweise aufgelöst und/oder ausgespült werden, so dass zwar noch ein mechanischer Verbund bestehen bleibt, jedoch die gewünschten Membraneigenschaften erzielt werden können.

Diese Schritte werden dann wiederholt, um ein beliebiges Bauteil mit membranartigen Eigenschaften in beliebig komplexen Geometrien vorzusehen.

## Patentansprüche

1. Verfahren zum generativen Fertigen eines dreidimensionalen membranartigen Bauteils umfassend die folgenden Schritte:
Bereitstellen eines Ausgangsmaterials,
Schmelzen des Ausgangsmaterials mit einer Wärmequelle zum Ausbilden einer Bauteilschicht,
Wiederholen der vorstehenden Schritte,
**dadurch gekennzeichnet,**
**dass** zumindest ein Schritt vorgesehen ist, bei dem Poren in zumindest einer Bauteilschicht ausgebildet werden, so dass zumindest ein Bereich des Bauteils membranartige Eigenschaften aufweist.

2. Verfahren gemäß Anspruch 1,
**dadurch gekennzeichnet,**
**dass** der Schritt bei dem Poren in zumindest einer Bauteilschicht ausgebildet werden durch generatives Fertigen derart ausgeführt wird, dass
das Ausgangsmaterial nur teilweise vollständig aufgeschmolzen wird und im Bereich des nicht-aufgeschmolzenen Ausgangsmaterial die trennschichtartigen Poren ausgebildet werden und/oder
das Fehlstellen im Bauteil ausgebildet werden, um die trennschichtartigen Poren auszubilden.

3. Verfahren gemäß Anspruch 1 oder 2,
**dadurch gekennzeichnet,**
**dass** der Schritt bei dem trennschichtartige Poren in zumindest einer Bauteilschicht ausgebildet werden durch eine zusätzliche chemische Behandlung einer Schicht als Zwischenschritt während des Fertigens oder nach Abschluss der generativen Fertigungsschritte als Nachbehandlung derart ausgeführt wird, dass Material aufgelöst und/oder ausgespült wir, um die trennschichtartigen Poren auszubilden.

4. Verfahren gemäß einem der Ansprüche 1 bis 3,
**dadurch gekennzeichnet,**
**dass** in einem und/oder in mehreren Schritten unterschiedliche Ausgangsmaterialien in verschiedenen Schichten und/oder in verschiedenen Bereichen des Bauteils verwendet werden wobei das oder die Ausgangsmaterialien aus Metall oder Kunststoff ausgebildet sind.

5. Verfahren gemäß einem der Ansprüche 1 bis 4,
**dadurch gekennzeichnet,**
**dass** die Poren eine Porosität bzw. einen Durchmesser von 1 mm bis in etwa 10 µm aufweisen.

6. Verfahren gemäß einem der Ansprüche 1 bis 5,
**dadurch gekennzeichnet,**
**dass** während des Verfahrens ein Prozessgas zugeführt wird.

7. Verfahren gemäß einem der Ansprüche 1 bis 6,
**dadurch gekennzeichnet**
**dass** während des generativen Fertigens ein Temperieren, d.h. ein Kühlen und/oder ein Erwärmen des Ausgangsmaterials und/oder des Prozessgases erfolgt und/oder, dass ein Stabilisierungsschritt vorgesehen ist, in dem eine Schicht gekühlt und verfestigt wird.

8. Generativ Gefertigtes eines dreidimensionalen membranartiges Bauteil, wobei das Bauteil mit einem Verfahren gemäß einem der Ansprüche 1 bis 7 hergestellt ist,
**dadurch gekennzeichnet,**
**dass** in zumindest einem Bereich des Bauteils Poren ausgebildet sind, so dass
das Bauteil membranartige Eigenschaften aufweist.

9. Bauteil gemäß Anspruch 8,
**dadurch gekennzeichnet,**
**dass** das Bauteil eine homogene oder eine inhomogene Geometrie in einer Durchflussrichtung aufweist, so dass der Bereich des Bauteils in dem Poren ausgebildet sind selektiv permeabel, unidirektional permeabel oder omnipermeabel ausgebildet ist.

10. Bauteil gemäß Anspruch 8 oder 9,
**dadurch gekennzeichnet,**
**dass** das Bauteil eine Membran, eine Abscheideeinrichtung, ein Sieb, ein Molekularsieb oder ein Filter ist.
